# EUROPÄISCHE PATENTSCHRIFT

(11) **EP 1 731 476 B1**
(45) Veröffentlichungstag und Bekanntmachung des Hinweises auf die Patenterteilung: **12.01.2011**
(21) Anmeldenummer: 06011620.9
(22) Anmeldetag: 06.06.2006
(51) Int. Cl.: B66F 9/075

(54) **Antriebsteil eines Flurförderzeugs**
Driving section of forklift
Partie d'entraînement d'un chariot élévateur

(30) Priorität: 10.06.2005 DE 102005026914
(43) Veröffentlichungstag der Anmeldung: 13.12.2006
(73) Patentinhaber: OM Carrelli Elevatori S.p.A., 20020 Lainate (MI) (IT)
(72) Erfinder: Hoock, Michael, 22299 Hamburg (DE)
(74) Vertreter: Geirhos, Johann

(56) Entgegenhaltungen:
- DE-A1- 10 312 432
- US-A- 2 477 789
- US-A- 3 756 350

## Beschreibung

Die Erfindung betrifft ein Antriebsteil eines Flurförderzeugs, insbesondere Kommissionierers, mit einem Rahmen, einer ein lenkbares Antriebsrad aufweisenden Fahrantriebseinheit, einer elektrischen Steuerungseinheit und einer Hydraulikeinheit, wobei die elektrische Steuerungseinheit und die Hydraulikeinheit an einem Aggregateträger angeordnet sind, der am Rahmen lösbar befestigbar ist, insbesondere mittels mindestens einer Schraubverbindung.

Bei gattungsgemäßen Antriebsteilen für als Kommissionierer ausgebildeten Flurförderzeugen ist die Außenwand des Antriebsteils als tragender Rahmen ausgebildet. Die den Rahmen bildende Außenwand besteht aus einem unteren horizontalen Rahmenabschnitt und seitlichen vertikalen Rahmenabschnitten sowie einer vertikalen Rahmenwand, mit der der Antriebsteil zu einem Batteriefach abgegrenzt ist. Die Rahmenabschnitte und die vertikale Rahmenwand sind hierbei miteinander verbunden, insbesondere mittels Schweißverbindungen. An diesem Rahmen sind die Fahrantriebseinheit, eine elektrische Steuerungseinheit und eine Hydraulikeinheit befestigt, beispielsweise die Fahrantriebseinheit an dem horizontalen Rahmenabschnitt und die elektrische Steuerungseinheit sowie die Hydraulikeinheit an der dem Batteriefach zugewandten vertikalen Rahmenwand. Zur Befestigung der Fahrantriebseinheit, der elektrischen Steuerungseinheit und der Hydraulikeinheit an dem Rahmen sind im Rahmen Gewindebohrungen ausgebildet, in denen die Fahrantriebseinheit, die elektrische Steuerungseinheit und die Hydraulikeinheit mittels Befestigungsschrauben eingeschraubt werden können.

Ein derartiger aus einem horizontalen Rahmenabschnitt, seitlichen Rahmenabschnitten und einer Rahmenwand bestehender Rahmen weist jedoch einen hohen Bauaufwand auf. Zudem ergibt sich ein hoher Montageaufwand für das Antriebsteil, da die Fahrantriebseinheit, die elektrische Steuerungseinheit und die Hydraulikeinheit zeitlich nacheinander am Rahmen befestigt werden müssen.

Aus der US 3 756 350 ist ein Flurförderzeug bekannt, das einen Antriebsteil aufweist, der mit einer Fahrantriebseinheit, einer Hydraulikeinheit und einer elektrischen Steuerungseinheit versehen ist. Der Antriebssteil weist hierbei eine horizontale Grundplatte auf, an der die Fahrantriebseinheit, die Hydraulikeinheit und die elektrische Steuerungseinheit angeordnet ist. Das Antriebsteil, ist hierbei als eigenständige Montagebaugruppe ausgebildet, das an dem Rahmen des Flurförderzeugs mittels Schraubverbindungen lösbar befestigbar ist.

Der vorliegenden Erfindung liegt die Aufgabe zugrunde, ein Antriebsteil der eingangs genannten Art zur Verfügung zu stellen, das einen geringen Herstellaufwand aufweist und einen geringen Montageaufwand verursacht und hinsichtlich des Wartungs- und Serviceaufwandes verbessert ist.

Diese Aufgabe wird erfindungsgemäß dadurch gelöst, dass der Aggregateträger eine von zwei seitlich beabstandeten Seitenplatten und einer Deckelplatte gebildete U-förmige Trägerplatte aufweist, wobei zwischen den Seitenplatten die Fahrantriebseinheit angeordnet ist, wobei die Hydraulikeinheit einen Pumpenmotor, eine mindestens ein Hydraulikventil aufweisende Hydraulikventileinheit und einen Druckmittelbehälter aufweist und wobei der Pumpenmotor und/oder die Hydraulikventileinheit und/oder der Druckmittelbehälter an zumindest einer Seitenplatte der Trägerplatte lösbar befestigt sind, insbesondere mittels mindestens einer Schraubverbindung, und wobei die elektrische Steuerungseinheit eine Leistungselektronikeinheit aufweist, die an der Deckelplatte der Trägerplatte lösbar befestigt ist, insbesondere mittels mindestens einer Schraubverbindung. Der erfindungsgemäße Aggregateträger weist eine U-förmige Trägerplatte auf, die von zwei Seitenplatten und einer Deckelplatte gebildet ist. An einer derartigen U-förmigen Trägerplatte kann die elektrische Steuerungseinheit und die Hydraulikeinheitauf einfache und platzsparende Weise angeordnet werden. Die von den Seitenplatten und der Deckelplatte gebildete Trägerplatte kann hierbei einstückig ausgebildet sein oder einen mehrteiligen Aufbau aufweisen, wobei die Deckelplatte an der Seitenplatte lösbar befestigt ist, insbesondere mittels mindestens einer Schraubverbindung. Durch die Anordnung des Pumpenmotors und/oder der Hydraulikventileinheit und/oder des Druckmittelbehälters an den Seitenplatten der Trägerplatte ergibt sich eine günstige und platzsparende Anordnung der Hydraulikeinheit an dem Aggregateträger. Die Seitenplatten sind hierbei voneinander seitlich beabstandet, wobei zwischen den Seitenplatten die Fahrantriebseinheit angeordnet ist, wodurch die Fahrantriebseinheit mit guter Zugänglichkeit und Erreichbarkeit für Wartungs- und Servicearbeiten angeordnet werden kann. Durch die Anordnung der Leistungselektronik der elektrischen Steuerungseinheit an der Deckelplatte der Trägerplatte ist eine gute Erreichbarkeit für Wartungs- und Servicearbeiten der Leistungselektronikeinheit erzielbar. Durch einen derartigen, mit der elektrischen Steuerungseinheit und der Hydraulikeinheit versehenen, von einem U-förmigen Trägerplatte gebildeten Aggregateträger kann bei der Montage des Antriebsteils die elektrische Steuerungseinheit sowie die Hydraulikeinheit durch eine Befestigung des Aggregateträgers am Rahmen am Antriebsteil montiert werden. Hierdurch ist für das Antriebsteil ein geringer Montageaufwand erzielbar. Durch die Befestigung der elektrischen Steuerungseinheit und der Hydraulikeinheit an dem von dem U-förmigen Trägerplatte gebildeten Aggregateträger ist zudem möglich, den Aufbau des Rahmens zu vereinfachen, wodurch ein Rahmen mit verringertem Bauaufwand und somit ein Antriebsteil mit verringertem Herstellaufwand erzielbar ist.

Besondere Vorteile ergeben sich, wenn gemäß einer Ausführungsform der Erfindung der Aggregateträger an einem horizontalen Rahmenabschnitt des Rahmens lösbar befestigbar ist. An dem Rahmen ist durch die Befestigung des Aggregateträgers, an dem die elektrische Steuerungseinheit und die Hydraulikeinheit angeordnet ist, an dem horizontalen Rahmenabschnitt des Rahmens lediglich ein horizontaler Rahmenabschnitt erforderlich, wodurch gegenüber einem Antriebsteil des Standes der Technik auf vertikale seitliche Rahmenabschnitte und insbesondere eine vertikale Rahmenwand zum Batteriefach verzichtet werden kann. Hierdurch ist ein einfacher Aufbau des Rahmens, der einen geringen Herstellaufwand aufweist, erzielbar.

Gemäß einer bevorzugten Weiterbildung der Erfindung weist der Aggregateträger einen mehrteiligen Aufbau. Hierdurch ist eine einfache und kostengünstige Herstellung des Aggregateträgers mit einer günstigen Anordnung der elektrischen Steuerungseinheit sowie der Hydraulikeinheit erzielbar.

Besondere Vorteile ergeben sich, wenn in Weiterbildung der Erfindung der Aggregateträger eine Grundplatte aufweist, die am Rahmen lösbar befestigbar ist, insbesondere mittels mindestens einer Schraubverbindung, und die Trägerplatte an der Grundplatte lösbar befestigbar ist, insbesondere mittels mindestens einer Schraubverbindung. Durch einen derartigen mehrteiligen Aufbau des Aggregateträgers mit einer Grundplatte und einer mindestens eine Seitenplatte und eine Deckelplatte umfassenden Trägerplatte, die miteinander verschraubt sind, ist ein stabiler rechteckförmiger Aufbau des Aggregateträgers erzielbar, der auf platzsparende Weise die Anordnung der elektrischen Steuerungseinheit und der Hydraulikeinheit ermöglicht. Durch die Befestigung der Grundplatte über Schraubverbindungen an dem Rahmen kann hierbei der Aggregateträger auf einfache Weise an dem Rahmen befestigt werden.

Besondere Vorteile ergeben sich, wenn gemäß einer bevorzugten Weiterbildung der Erfindung, wobei die Fahrantriebseinheit einen mit einem Antriebsrad in Wirkverbindung stehenden Antriebsmotor und einen Lenkmotor aufweist, der Antriebsmotor und/oder der Lenkmotor der Fahrantriebseinheit an der Grundplatte lösbar befestigbar sind, insbesondere mittels mindestens einer Schraubverbindung. Die Anordnung des Antriebsmotors und des Lenkmotors der Fahrantriebseinheit an der Grundplatte, die unmittelbar am Rahmen befestigt ist, ermöglicht eine stabile und platzsparende Anordnung der Fahrantriebseinheit an dem Aggregateträger innerhalb der Trägerplatte. Durch die zusätzliche Anordnung und Befestigung der Fahrantriebseinheit an der Grundplatte des Aggregateträgers kann die Montage und die Herstellung des Antriebsteils weiter verringert werden.

Besondere Vorteile sind erzielbar, wenn gemäß einer bevorzugten Ausgestaltungsform der Erfindung an einer Seitenplatte der Trägerplatte der Pumpenmotor und/oder der Druckmittebehälter und an der weiteren Seitenplatte der Trägerplatte die Hydraulikventileinheit angeordnet sind. Hierdurch ist für Wartungs- und Servicearbeiten eine gute Zugänglichkeit und Erreichbarkeit des Pumpenmotors, des Druckmittelbehälters und der Hydraulikventileinheit erzielbar.

Gemäß einer bevorzugten Ausgestaltungsform der Erfindung steht die elektrische Steuerungseinheit mit einer Aluminiumplatte in Wirkverbindung. Durch die Anordnung der elektrischen Steuerungseinheit an einer Aluminiumplatte kann die von der elektrischen Steuerungseinheit im Betrieb erzeugte Abwärme über die Deckelplatte verteilt und abgeführt werden. Hierbei kann die Deckelplatte bei einer mehrteiligen Trägerplatte als Aluminiumplatte ausgebildet werden oder bei einer einteiligen Trägerplatte die elektrische Steuerungseinheit über eine zusätzliche Aluminiumplatte an der Deckelplatte angeordnet werden.

Eine einfache Herstellung des Aggregateträgers und des Rahmens ist erzielbar, wenn die Schraubverbindung als in einer Durchgangsbohrung angeordnete Schrauben-Mutter-Verbindung ausgebildet ist. Hierdurch ist zur Herstellung des Antriebsteils eine einfache Lackierung des Rahmens und der Grundplatte sowie der Trägerplatte des Aggregateträgers erzielbar, da die Durchgangsbohrungen für die Schraubverbindungen im Aggregateträger und im Rahmen während des Lackierens gegenüber im Rahmen ausgebildeter Gewindebohrungen des Standes der Technik nicht geschützt werden müssen.

Eine einfache Herstellung und Montage des Aggregateträgers ist erzielbar, wenn die Grundplatte und/oder die Trägerplatte als Montagebaugruppe ausgebildet ist. Durch den mehrteiligen Aufbau des Aggregateträgers kann die Grundplatte mit dem Antriebsmotor und dem Lenkmotor der Fahrantriebseinheit als Montagebaugruppe und die Trägerplatte mit der Hydraulikeinheit und der elektrischen Steuerungseinheit als Montagebaugruppe ausgebildet werden, wodurch sich eine einfache und kostengünstige Herstellung des Aggregateträgers ergibt.

Sofern gemäß einer vorteilhaften Ausführungsform der Erfindung der Aggregateträger als Vormontagebaugruppe ausgebildet ist, ist eine einfache und kostengünstige Montage und Herstellung des Antriebsteils möglich. Bei der Montage des Antriebsteils ist hierbei lediglich der als Vormontagebaugruppe ausgebildete Aggregateträger am Rahmen des Antriebsteils zu montieren, um die elektrische Steuerungseinheit, die Hydraulikeinheit und gegebenenfalls die Fahrantriebseinheit am Antriebsteil zu befestigen.

Sofern an dem Rahmen ein Batteriefach ausgebildet ist, ergeben sich besondere Vorteile, wenn an einer den Aggregateträger abdeckenden Haube eine Rückwand zum Batteriefach ausgebildet ist. Durch den erfindungsgemäßen Aggregateträger kann an dem Rahmen auf eine vertikale Rahmenwand zur Abgrenzung zum Batteriefach verzichtet werden. Die Rahmenwand zur Abgrenzung des Batteriefachs kann hierbei an der den Aggregateträger abdeckenden Haube auf einfache und kostengünstige Weise durch eine Rückwand hergestellt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug,
- Figur 2: das Antriebsteil in einer Vorderansicht,
- Figur 3: das Antriebsteil in einer Seitenansicht,
- Figur 4: den Aggregateträger in einer perspektivischen Ansicht und
- Figur 5: eine weitere perspektivische Ansicht des Aggregateträgers.

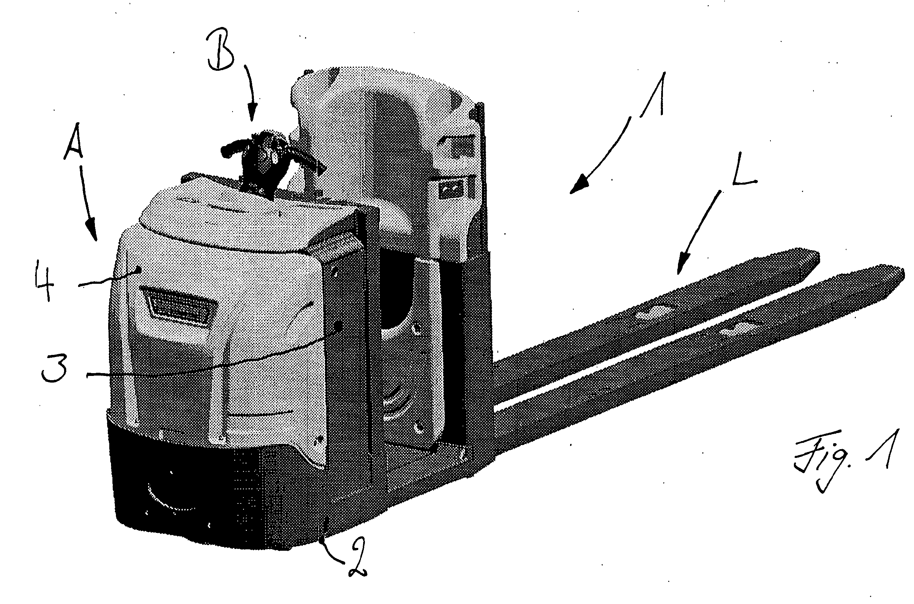

In der Figur 1 ist ein als Kommissionier 1 ausgebildetes Flurförderzeug dargestellt. Der Kommissionierer 1 weist in Längsrichtung gesehen einen Antriebsteil A und einen anhebbaren Lastteil L auf, wobei zwischen Antriebsteil A und Lastteil L ein Bedienstand B für eine Bedienperson angeordnet ist.

Als tragendes Bauteil des Antriebsteils A ist ein Rahmen 2 vorgesehen. Das Antriebsteil A weist weiterhin ein Batteriefach zur Aufnahme eines Batterieblocks 3 auf, das in Längsrichtung benachbart zu einer an der Vorderseite des Antriebsteils A angeordneten Haube 4 angeordnet ist.

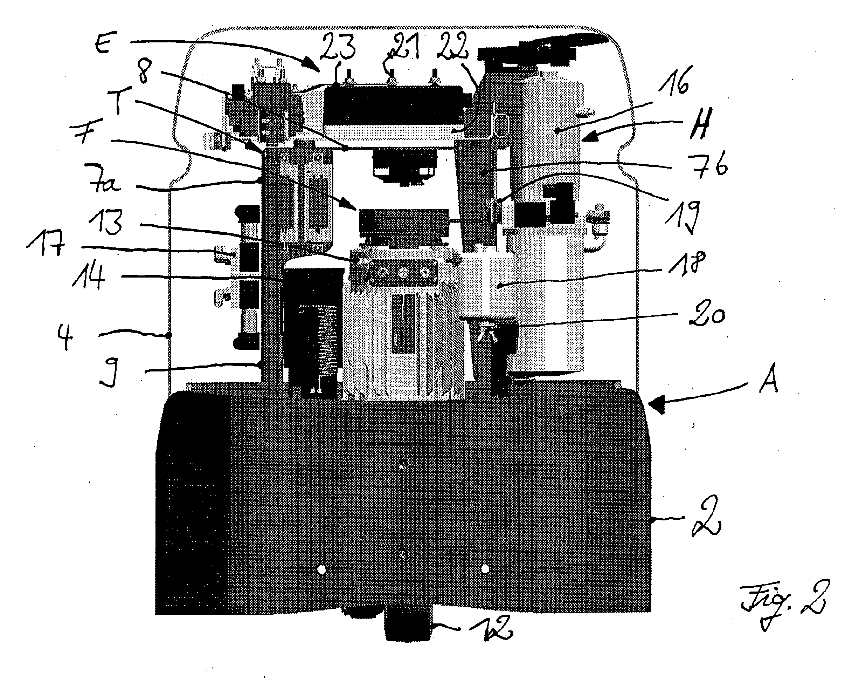

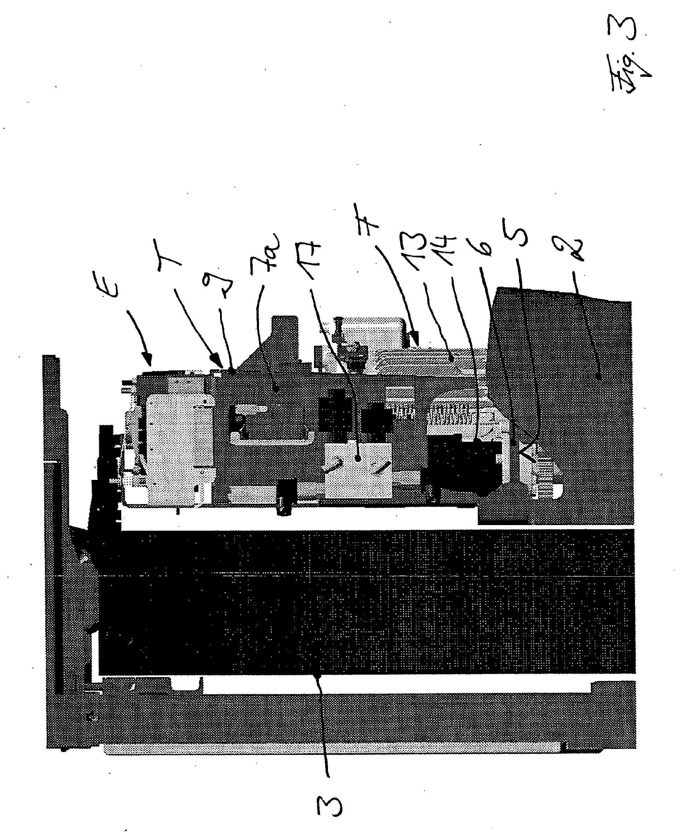

Im vorderen Bereich des Antriebsteils A ist unter der Haube 4 - wie aus den Figuren 2 bis 5 ersichtlich ist - eine Fahrantriebseinheit F, eine elektrische Steuerungseinheit E und eine Hydraulikeinheit H angeordnet. Die elektrische Steuerungseinheit E und die Hydraulikeinheit H sind hierbei erfindungsgemäß an einem Aggregateträger T angeordnet und befestigt. Zusätzlich ist an dem Aggregateträger T die Fahrantriebseinheit F angeordnet und befestigt.

Der Aggregateträger T ist an einem horizontalen Rahmenabschnitt 5 des Rahmens 2 lösbar befestigt und weist einen mehrteiligen Aufbau mit einer Grundplatte 6 und einer U-förmigen Trägerplatte 9 auf. Die Trägerplatte 9 weist hierbei zwei seitlich beabstandete vertikale Seitenplatten 7a, 7b und eine horizontale Deckelplatte 8 auf.

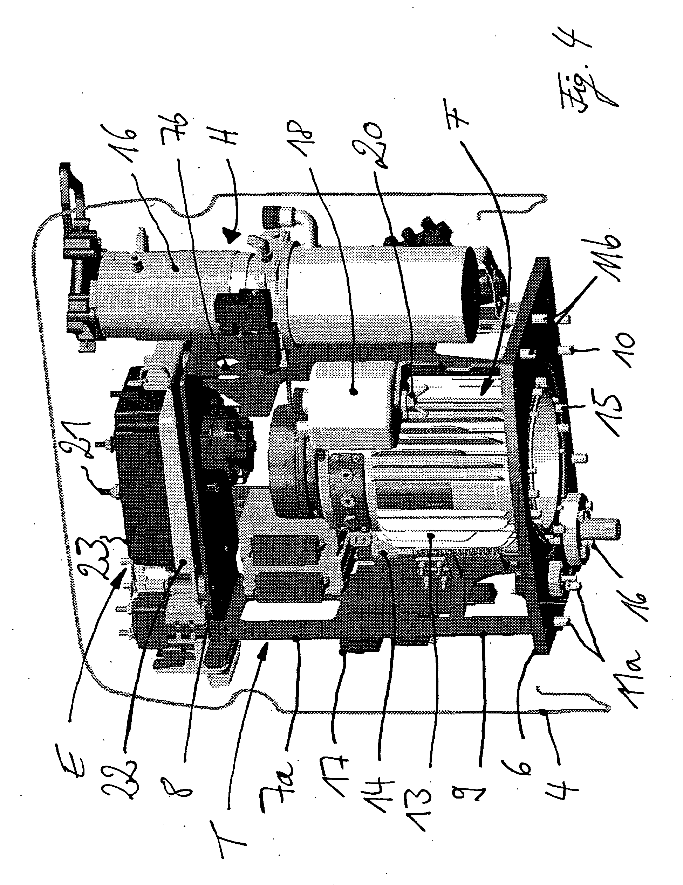

Zur Befestigung des Aggregateträgers T an dem Rahmen 2 ist die Grundplatte 6 - wie aus Figur 4 ersichtlich ist - mittels Schraubverbindungen 10 an dem horizontalen Rahmenabschnitt 5 des Rahmens 2 des Antriebsteils A lösbar befestigt. Die U-förmige Trägerplatte 9 ist über die Seitenplatten 7a, 7b mittels Schraubverbindungen 11a, 11b an der Grundplatte 6 lösbar befestigt. Es ist ebenfalls möglich, bei einem lediglich die Trägerplatte 9 aufweisenden Aggregateträger T mittels der Schraubverbindungen 11a, 11b die Trägerplatte 9 direkt an dem horizontalen Rahmenabschnitt 5 des Rahmens 2 zu befestigen.

Die Fahrantriebseinheit F umfasst einen mit einem Antriebsrad 12 in Wirkverbindung stehenden Antriebsmotor 13 und einen Lenkmotor 14, die an der Grundplatte 6 zwischen den seitlich beabstandeten Seitenplatten 7a, 7b der Trägerplatte 9 mittels Schraubverbindungen 15, 16 lösbar befestigt sind.

Die Hydraulikeinheit H umfasst einen Pumpenmotor 16, eine mindestens ein Hydraulikventil umfassende Hydraulikventileinheit 17 und einen Druckmittelbehälter 18. Der Pumpenmotor 16 ist mittels Schraubverbindungen 19 an der Seitenplatte 7b der Trägerplatte 9 lösbar befestigt. An der Seitenplatte 7b der Trägerplatte 9 ist weiterhin der Druckmittelbehälter 18 mittels einer Schraubverbindung 20 lösbar befestigt. Die Hydraulikventileinheit 17 ist mittels nicht mehr dargestellter Schraubverbindungen an der Seitenplatte 7a der Trägerplatte 9 lösbar befestigt.

Die elektrische Steuerungseinheit E umfasst eine Leistungselektronikeinheit 23 zur Steuerung der Fahrantriebseinheit F und der Hydraulikeinheit H, die unter Zwischenschaltung einer Aluminiumplatte 22 an der Deckelplatte 8 der Trägerplatte 9 mittels Schraubverbindungen 21 lösbar befestigt ist.

Die Schraubverbindungen 15, 16 zur Befestigung der Fahrantriebeseinheit F an der Grundplatte 6, die Schraubverbindungen 19, 20 zur Befestigung der Hydraulikeinheit H an den Seitenplatten 7a, 7b der Trägerplatte 9 und die Schraubverbindungen 21 zur Befestigung der elektrische Steuerungseinheit E an der Deckelplatte 8 der Trägerplatte 9 sowie die Schraubverbindungen 11a, 11 b zur Verbindung der Grundplatte 6 mit der Trägerplatte 9 und die Schraubverbindungen 10 zur Befestigung des Aggregateträgers T an dem Rahmenabschnitt 5 des Rahmens 2 sind hierbei jeweils als in einer Durchgangsbohrung angeordnete Schrauben-Mutter-Verbindung ausgebildet.

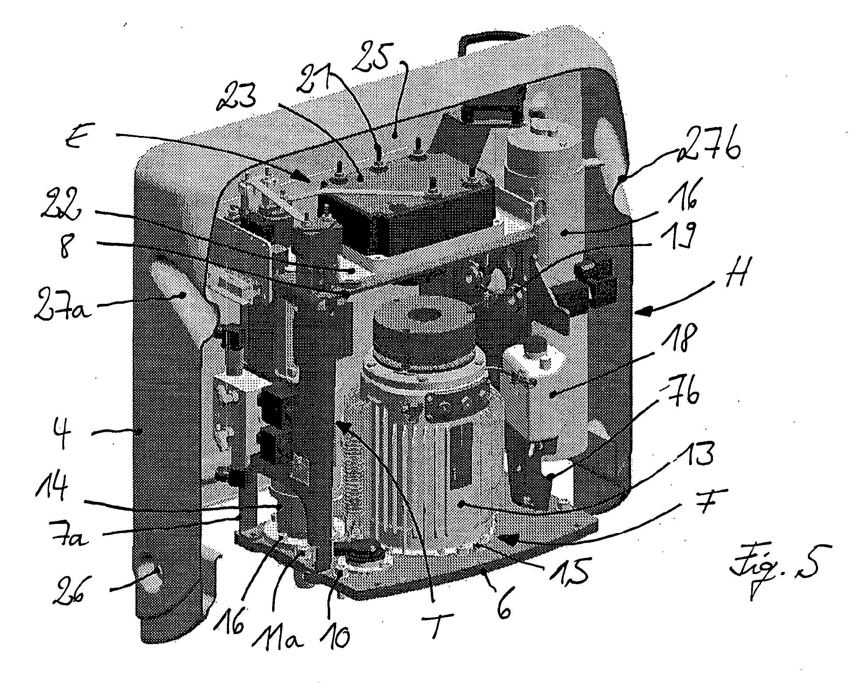

Die den Aggregateträger T abdeckende Haube 4 ist - wie in Figur 5 dargestellt ist - mit einer Rückwand 25 zum Batteriefach versehen und kann mittels Befestigungsschrauben 26 am Rahmen 2 befestigt werden. Die Montage und Demontage der Haube 4 erfolgt in vertikaler Richtung, wobei an den Seitenflächen der Haube 4 Handgriffe formende Ausbuchtungen 27a, 27b ausgebildet sind.

Die von der Deckelplatte 8, an der die elektrische Steuerungseinheit E angeordnet ist, und den Seitenplatten 7a, 7b, die mit der Hydraulikeinheit H versehen ist, gebildete Trägerplatte 9 sowie die Grundplatte 6, an der die Fahrantriebseinheit F angeordnet ist, sind jeweils als Montagebaugruppe des Aggregateträgers T ausgebildet. Vor dem Zusammenbau des von der Grundplatte 6 und der Trägerplatte 9 gebildeten Aggregateträger T wird an der Deckelplatte 8 der Trägerplatte 9 mittels den Verschraubungen 21 die Leistungselektronikeinheit 23 der elektrischen Steuerungseinheit E und an den Seitenplatten 7a, 7b mittels den Verschraubungen 19, 20 die Hydraulikventileinheit 17 sowie der Pumpenmotor 16 und der Druckmittelbehälter 18 der Hydraulikeinheit H befestigt. Vor dem Zusammenbau des Aggregateträgers T wird weiterhin an der Grundplatte 6 mittels den Verschraubungen 15, 16 der Fahrmotor 13 sowie der Lenkmotor 14 der Fahrantriebseinheit F befestigt.

Der mit der elektrischen Steuerungseinheit E und der Hydraulikeinheit H sowie der Fahrantriebseinheit F versehene Aggregateträger T ist - wie in der Figur 4 gezeigt ist - als Vormontagebaugruppe ausgebildet, der bei der Montage des Antriebsteils A mittels der Verschraubungen 10 an dem horizontalen Rahmenabschnitt 5 des Rahmens 2 des Antriebsteils 2 befestigt werden kann.

Durch die Anordnung der elektrischen Steuerungseinheit E und der Hydraulikeinheit H an dem Aggregateträger T, an dem zusätzlich die Fahrantriebseinheit F angeordnet werden kann, und die Ausbildung der Haube 4 mit der Rückwand 25 zum Batteriefach ist am Rahmen lediglich ein horizontaler Rahmenabschnitt 5 erforderlich, wodurch der Rahmen des Antriebsteils A einen geringen Herstellaufwand aufweist. Durch die Ausbildung des Aggregateträgers T als Vormontagebaugruppe ist weiterhin eine einfache Montage des Antriebsteils A erzielbar. Die Anordnung der Fahrantriebseinheit F, der elektrischen Steuerungseinheit E und der Hydraulikeinheit H an dem Aggregateträger T mit der U-förmigen Trägerplatte 9 ermöglicht weiterhin bei entfernter Haube 4 eine gute Zugänglichkeit und Erreichbarkeit der Fahrantriebseinheit F, der elektrischen Steuerungseinheit E und der Hydraulikeinheit H für Wartungs- und Servicearbeiten.

## Patentansprüche

1. Antriebsteil eines Flurförderzeugs, insbesondere Kommissionierers, mit einem Rahmen, einer ein lenkbares Antriebsrad aufweisenden Fahrantriebseinheit, einer elektrischen Steuerungseinheit und einer Hydraulikeinheit, wobei die elektrische Steuerungseinheit (E) und die Hydraulikeinheit (H) an einem Aggregateträger (T) angeordnet sind, der am Rahmen (2) lösbar befestigbar ist, insbesondere mittels mindestens einer Schraubverbindung (10), **dadurch gekennzeichnet, dass** der Aggregateträger (T) eine von zwei seitlich beabstandeten Seitenplatten (7a; 7b) und einer Deckelplatte (8) gebildete U-förmige Trägerplatte (9) aufweist, wobei zwischen den Seitenplatten (7a, 7b) die Fahrantriebseinheit (F) angeordnet ist, wobei die Hydraulikeinheit (H) einen Pumpenmotor (16), eine mindestens ein Hydraulikventil aufweisende Hydraulikventileinheit (17) und einen Druckmittelbehälter (18) aufweist und wobei der Pumpenmotor (16) und/oder die Hydraulikventileinheit (17) und/oder der Druckmittelbehälter (18) an zumindest einer Seitenplatte (7a; 7b) der Trägerplatte (9) lösbar befestigt sind, insbesondere mittels mindestens einer Schraubverbindung (19; 20), und wobei die elektrische Steuerungseinheit (E) eine Leistungselektronikeinheit (23) aufweist, die an der Deckelplatte (8) der Trägerplatte (9) lösbar befestigt ist, insbesondere mittels mindestens einer Schraubverbindung (21).

2. Antriebsteil nach Anspruch 1, **dadurch gekennzeichnet, dass** der Aggregateträger (T) an einem horizontalen Rahmenabschnitt (5) des Rahmens (2) lösbar befestigbar ist.

3. Antriebsteil nach Anspruch 1 oder 2, **dadurch gekennzeichnet, dass** der Aggregateträger (T) einen mehrteiligen Aufbau aufweist.

4. Antriebsteil nach einem der Ansprüche 1 bis 3, **dadurch gekennzeichnet, dass** der Aggregateträger (T) eine Grundplatte (6) aufweist, die am Rahmen (2) lösbar befestigbar ist, insbesondere mittels mindestens einer Schraubverbindung.

5. Antriebsteil nach Anspruch 4, **dadurch gekennzeichnet, dass** die Trägerplatte (9) an der Grundplatte (6) lösbar befestigbar ist, insbesondere mittels mindestens einer Schraubverbindung (11a; 11b).

6. Antriebsteil nach Anspruch 4 oder 5 , wobei die Fahrantriebseinheit (F) einen mit dem Antriebsrad (12) in Wirkverbindung stehenden Antriebsmotor (13) und einen Lenkmotor (14) aufweist, **dadurch gekennzeichnet, dass** der Antriebsmotor (13) und/oder der Lenkmotor (14) der Fahrantriebseinheit (F) an der Grundplatte (6) lösbar befestigt sind, insbesondere mittels mindestens einer Schraubverbindung (15; 16).

7. Antriebsteil nach einem der Ansprüche 1 bis 6, **dadurch gekennzeichnet, dass** an einer Seitenplatte (7b) der Trägerplatte (9) der Pumpenmotor (16) und/oder der Druckmittelbehälter (18) und an der weiteren Seitenplatte (7a) der Trägerplatte (9) die Hydraulikventileinheit (17) angeordnet sind.

8. Antriebsteil nach einem der Ansprüche 1 bis 7, **dadurch gekennzeichnet, dass** die elektrische Steuerungseinheit (E) mit einer Aluminiumplatte (22) in Wirkverbindung steht.

9. Antriebsteil nach einem der vorangegangenen Ansprüche, **dadurch gekennzeichnet, dass** die Schraubverbindung (10; 11a; 11b; 15; 16; 19; 20; 21) als in einer Durchgangsbohrung angeordnete Schrauben-Mutter-Verbindung ausgebildet ist.

10. Antriebsteil nach einem der Ansprüche 1 bis 9, **dadurch gekennzeichnet, dass** die Grundplatte (6) und/oder die Trägerplatte (9) des Aggregateträgers (T) als Montagebaugruppe ausgebildet ist.

11. Antriebsteil nach einem der vorangegangenen Ansprüche, **dadurch gekennzeichnet, dass** der Aggregateträger (T) als Vormontagebaugruppe ausgebildet ist.

12. Antriebsteil nach einem der vorangegangenen Ansprüche, wobei an dem Rahmen (2) ein Batteriefach ausgebildet ist, **dadurch gekennzeichnet, dass** an einer den Aggregateträger (T) abdeckenden Haube (4) eine Rückwand (25) zum Batteriefach ausgebildet ist.

## Claims

1. Drive section of an industrial truck, in particular an order picker, having a frame, a traction drive unit with a steerable drive wheel, an electric control unit and a hydraulic unit, the electric control unit (E) and the hydraulic unit (H) being arranged on an assembly carrier (T), which can be detachably fixed to the frame (2), in particular by means of at least one screw connection (10), **characterized in that** the assembly carrier (T) has a U-shaped carrier plate (9) formed from two side plates (7a; 7b) spaced apart laterally from each other and a top plate (8), wherein the traction drive unit (F) is arranged between the side plates (7a; 7b), wherein the hydraulic unit (H) has a pump motor (16), a hydraulic valve unit (17) having at least one hydraulic valve and a pressure medium reservoir (18), and wherein the pump motor (16) and/or the hydraulic valve unit (17) and/or the pressure medium reservoir (18) are detachably fixed to at least one side plate (7a; 7b) of the carrier plate (9), in particular by means of at least one screw connection (19; 20), and wherein the electric control unit (E) has a power electronics unit (23) which is detachably fixed to the top plate (8) of the carrier plate (9), in particular by means of at least one screw connection (21).

2. Drive section according to Claim 1, **characterized in that** the assembly carrier (T) can be detachably fixed to a horizontal frame section (5) of the frame (2).

3. Drive section according to Claim 1 or 2, **characterized in that** the assembly carrier (T) has a multi-part structure.

4. Drive section according to one of Claims 1 to 3, **characterized in that** the assembly carrier (T) has a baseplate (6), which can be detachably fixed to the frame (2), in particular by means of at least one screw connection.

5. Drive section according to Claim 4, **characterized in that** the carrier plate (9) can be detachably fixed to the baseplate (6), in particular by means of at least one screw connection (11a; 11b).

6. Drive section according to Claim 4 or 5, the traction drive unit (F) having a drive motor (13) operatively connected to the drive wheel (12) and a steering motor (14), **characterized in that** the drive motor (13) and/or the steering motor (14) of the traction drive unit (F) are detachably fixed to the baseplate (6), in particular by means of at least one screw connection (15; 16).

7. Drive section according to one of Claims 1 to 6, **characterized in that** the pump motor (16) and/or the pressure medium reservoir (18) are arranged on one side plate (7b) of the carrier plate (9), and the hydraulic valve unit (17) is arranged on the further side plate (7a) of the carrier plate (9).

8. Drive section according to one of Claims 1 to 7, **characterized in that** the electric control unit (E) is operatively connected to an aluminium plate (22).

9. Drive section according to one of the preceding claims, **characterized in that** the screw connection (10; 11a; 11b; 15; 16; 19; 20; 21) is designed as a screw and nut connection arranged in a through hole.

10. Drive section according to one of Claims 1 to 9, **characterized in that** the baseplate (6) and/or the carrier plate (9) of the assembly carrier (T) is/are designed as an assembled module.

11. Drive section according to one of the preceding claims, **characterized in that** the assembly carrier (T) is designed as a pre-assembled module.

12. Drive section according to one of the preceding claims, a battery compartment being formed on the frame (2), **characterized in that** a rear wall (25) for the battery compartment is formed on a hood (4) covering the assembly carrier (T).

## Revendications

1. Partie d'entraînement d'un chariot élévateur, notamment d'un chariot élévateur de préparation des commandes, comprenant un châssis, une unité d'entraînement de conduite présentant une roue d'entraînement dirigeable, une unité de commande électrique et une unité hydraulique, l'unité de commande électrique (E) et l'unité hydraulique (H) étant disposées sur un support d'appareil (T) qui peut être fixé de manière amovible au châssis (2), notamment au moyen d'au moins une connexion vissée (10), **caractérisée en ce que** le support d'appareil (T) présente une plaque de support (9) en forme de U formée de deux plaques latérales espacées latéralement (7a ; 7b) et d'une plaque de recouvrement (8), l'unité d'entraînement de conduite (F) étant disposée entre les plaques latérales (7a, 7b), l'unité hydraulique (H) présentant un moteur de pompe (16), une unité de soupape hydraulique (17) présentant au moins une soupape hydraulique et un réservoir de fluide sous pression (18), et le moteur de pompe (16) et/ou l'unité de soupape hydraulique (17) et/ou le réservoir de fluide sous pression (18) étant fixés de manière amovible à au moins une plaque latérale (7a ; 7b) de la plaque de support (9), notamment au moyen d'au moins une connexion vissée (19 ; 20), et l'unité de commande électrique (E) présentant une unité électronique de puissance (23) qui est fixée de manière amovible à la plaque de recouvrement (8) de la plaque de support (9), notamment au moyen d'au moins une connexion vissée (21).

2. Partie d'entraînement selon la revendication 1, **caractérisée en ce que** le support d'appareil (T) peut être fixé de manière amovible à une portion de châssis horizontale (5) du châssis (2).

3. Partie d'entraînement selon la revendication 1 ou 2, **caractérisée en ce que** le support d'appareil (T) présente une structure en plusieurs parties.

4. Partie d'entraînement selon l'une quelconque des revendications 1 à 3, **caractérisée en ce que** le support d'appareil (T) présente une plaque de base (6) qui peut être fixée de manière amovible au châssis (2), notamment au moyen d'au moins une connexion vissée.

5. Partie d'entraînement selon la revendication 4, **caractérisée en ce que** la plaque de support (9) peut être fixée de manière amovible à la plaque de base (6), notamment au moyen d'au moins une connexion vissée (11a ; 11b).

6. Partie d'entraînement selon la revendication 4 ou 5, dans laquelle l'unité d'entraînement de conduite (F) présente un moteur d'entraînement (13) en liaison fonctionnelle avec la roue d'entraînement (12) et un moteur de direction (14), **caractérisée en ce que** le moteur d'entraînement (13) et/ou le moteur de direction (14) de l'unité d'entraînement de conduite (F) sont fixés de manière amovible à la plaque de base (6), notamment au moyen d'au moins une connexion vissée (15 ; 16).

7. Partie d'entraînement selon l'une quelconque des revendications 1 à 6, **caractérisée en ce que** le moteur de pompe (16) et/ou le réservoir de fluide sous pression (18) sont disposés sur une plaque latérale (7b) de la plaque de support (9), et l'unité de soupape hydraulique (17) est disposée sur l'autre plaque latérale (7a) de la plaque de support (9).

8. Partie d'entraînement selon l'une quelconque des revendications 1 à 7, **caractérisée en ce que** l'unité de commande électrique (E) est en liaison fonctionnelle avec une plaque en aluminium (22).

9. Partie d'entraînement selon l'une quelconque des revendications précédentes, **caractérisée en ce que** la connexion vissée (10 ; 11a ; 11b ; 15 ; 16 ; 19 ; 20 ; 21) est réalisée sous forme de connexion à vis et écrou disposée dans un alésage traversant.

10. Partie d'entraînement selon l'une quelconque des revendications 1 à 9, **caractérisée en ce que** la plaque de base (6) et/ou la plaque de support (9) du support d'appareil (T) sont réalisées sous forme de module de montage.

11. Partie d'entraînement selon l'une quelconque des revendications précédentes, **caractérisée en ce que** le support d'appareil (T) est réalisé sous forme de module de prémontage.

12. Partie d'entraînement selon l'une quelconque des revendications précédentes, dans laquelle un compartiment de batterie est réalisé sur le châssis (2), **caractérisée en ce qu'**une paroi arrière (25) pour le compartiment de batterie est réalisée sur un capot (4) recouvrant le support d'appareil (T).
